# EUROPÄISCHE PATENTSCHRIFT

(11) **EP 1 858 725 B1**
(45) Veröffentlichungstag und Bekanntmachung des Hinweises auf die Patenterteilung: **24.10.2018**
(21) Anmeldenummer: 06725087.8
(22) Anmeldetag: 15.03.2006
(51) Int. Cl.: B60L 7/00, B60L 9/28, B60L 11/18, B60L 15/20, H02P 3/18, H02P 3/24, H02P 6/18, H02P 6/24

(54) **HALTEBREMSE FÜR GLEISGEBUNDENE TRIEBFAHRZEUGE**
STOP BRAKE FOR RAILWAY TRACTION VEHICLES
FREIN D'ARRET DESTINE A DES MOTRICES SUR RAILS

(30) Priorität: 18.03.2005 DE 102005012670
(43) Veröffentlichungstag der Anmeldung: 28.11.2007
(73) Patentinhaber: Siemens Aktiengesellschaft, 80333 München (DE)
(72) Erfinder: BERGNER, Hans, 91058 Erlangen (DE); HOFFMANN, Thilo, A-8043 Graz (AT); JÖCKEL, Andreas, 90408 Nürnberg (DE); TEICHMANN, Martin, A-8045 Graz (AT)
(86) Internationale Anmeldenummer: PCT/EP2006/060771
(87) Internationale Veröffentlichungsnummer: WO 2006/097499

(56) Entgegenhaltungen:
- EP-A2- 1 201 484
- DE-A1- 19 843 123
- GB-A- 517 468
- US-A1- 2004 004 455

## Beschreibung

Die Erfindung betrifft eine Haltebremse für gleisgebundene Triebfahrzeuge, wobei die Haltebremse mittels zumindest einer elektrischen Maschine realisiert ist, welche einen Rotor und einen Stator aufweist.

Im Bahnverkehr werden Triebfahrzeuge eingesetzt, um Güterwaggons oder Personenwaggons zu ziehen. Für den Fahrgast-Betrieb zugelassene, elektrisch angetriebene und gleisgebunden Triebfahrzeuge haben zusätzlich zur generatorischen elektrischen Betriebsbremse eine pneumatische, hydraulisch oder elektrisch betätigte mechanische (Ersatz-)Bremse. Für die generatorische elektrische Betriebsbremse kann ein PM-Synchronmotor des Triebfahrzeugs, welcher Permanentmagnete am Läufer aufweist, als Generator betrieben werden. Betrieblich wird das Triebfahrzeug nur mit der generatorischen elektrischen Betriebsbremse zum Stillstand gebracht. Die mechanische Bremse wird im Bahnhof oder an der Haltestelle angelegt, sobald sich das Fahrzeug im Stillstand befindet. Die mechanische Bremse wird dann als Haltebremse benutzt. Die Funktion der Haltebremse im Bahnhof muss betrieblich sehr sicher realisiert werden, da das Fahrzeug sich beim Fahrgastwechsel unter keinen Umständen ungewollt bewegen darf.

Es ist aus z.B. EP 0 875 433 B1 bekannt, wie eine mechanische Haltebremse für Schienenfahrzeuge aufgebaut sein kann. Aus US 5,564,795 ist bekannt, wie eine pneumatische Haltebremse und deren Ansteuerung aufgebaut sein können. In beiden Fällen sind die Haltebremsen mechanisch komplex aufgebaut.

In der DE 198 43 123 A1 ist eine Haltebremse für gleisgebundene Triebfahrzeuge offenbart. Zur Generierung der Haltebremsfunktion ist ein elektrischer Motor mit einem Stator und einem Rotor vorgesehen.

Die GB 517468A offenbart ein Verfahren zum Bremsen eines elektrischen Motors.

In der US 2004/0004455 A1 ist ein Verfahren zur Bestimmung eines Winkels eines Rotors einer elektrischen Maschine offenbart.

Die EP 1 201 484 A3 offenbart eine Feststellbremseinrichtung für Schienenfahrzeuge.

Beim Betätigen und Lösen einer pneumatischen Haltebremse für gleisgebundene Triebfahrzeuge wird allerdings viel Druckluft verbraucht, die aufwendig und mit schlechtem Wirkungsgrad mit einem elektrisch angetriebenen Kompressor erzeugt werden muss. D.h., zum Betrieb der pneumatischen Haltebremse wird viel Energie verbraucht. Weiterhin wird der Fahrkomfort beim Lösen der mechanischen Haltebremse beeinträchtigt, da es beim Lösen und gleichzeitigen Anfahren des gleisgebunden Triebfahrzeugs zu einem Ruck kommen kann. Bei einer mechanischen Haltebremse kann es zu einem Verschleiß am Bremsklotz, der mechanischen Bremseinheit und ggf. bei einer pneumatischen Haltebremse auch am Kompressor kommen. Außerdem werden beim Betätigen und Lösen der pneumatischen Haltebremse Geräusche erzeugt.

Der Erfindung liegt deshalb die Aufgabe zugrunde, ein Triebfahrzeug mit einer Haltebremse anzugeben, welche weniger Energie verbraucht als eine pneumatische Haltebremse und durch welche der Fahrkomfort verbessert wird. Weiterhin soll die Haltebremse des erfindungsgemäßen Triebfahrzeugs keinen Verschleiß aufweisen und vergleichsweise wenig Geräusche erzeugen. Zudem soll der Stillstand des Triebfahrzeugs an einer bestimmten Stelle gewährleistet werden.

Diese Aufgabe wird erfindungsgemäß gelöst durch ein gleisgebundenes Triebfahrzeug mit einer Haltebremse, wobei die Haltebremse mittels zumindest einer elektrischen Maschine realisiert ist, welche einen Rotor und einen Stator aufweist, wobei eine Ansteuerung der elektrischen Maschine vorgesehen ist, welche die elektrische Maschine so ansteuert, dass die Lage des Rotors im Stator bei einem von außen einwirkenden Drehmoment gleich bleibt, wobei der Ansteuerung eine Lageregelung zugeordnet ist, mittels welcher der Rotor auf eine Solllage geregelt wird. Der Ansteuerung ist ein Rotor-Lagegeber zugeordnet, mit dem der Lagewinkel des Rotors bestimmt wird, oder der Ansteuerung ist ein Mittel zugeordnet, welches den Lagewinkel des Rotors aus elektrischen Größen mit Hilfe eines Rotorlage-Modells bestimmt.

D.h., eine elektrische Maschine wird nun als Haltebremse benutzt statt einer mechanischen Haltebremse. Damit tritt vorteilhafter Weise während des Betriebs der erfindungsgemäßen Haltebremse kein Verschleiß auf, da die Haltekräfte magnetisch erzeugt werden und nicht durch mechanische Kräfte. Ein weiterer Vorteil ist, dass keine Geräusche beim Betrieb der erfindungsgemäßen Haltebremse auftreten. Weiterhin wird ein Ruck beim Anfahren verhindert, wenn die als Haltebremse verwendete elektrische Maschine auch als Antriebsmotor verwendet wird.

Der Ansteuerung der elektrischen Maschine ist eine Lageregelung zugeordnet, um den Rotor auf eine Solllage zu regeln. Damit wird der Stillstand des gleisgebunden Triebfahrzeugs besonders vorteilhaft gewährleistet.

Der Lagewinkel des Rotors kann mit einem Rotor-Lagegeber bestimmt werden. Alternativ kann der Lagewinkel des Rotors auch aus elektrischen Größen mit Hilfe eines Rotorlage-Modells bestimmt werden.

Vorteilhafterweise beruht die Bestimmung des Lagewinkels des Rotors auf der Auswertung von magnetischen Unsymmetrien des Rotors beruht, indem elektrische Größen ausgewertet werden. Hierbei werden elektrische Größen wie z.B. die Eingangsspannung oder der in die elektrische Maschine fließende Strom ausgewertet.

Bevorzugt beruht die Bestimmung des Lagewinkels des Rotors auf der Auswertung von lageabhängigen Induktivitätsunterschieden des Rotors. Gerade mit Hilfe der oben genannten Möglichkeiten zur Bestimmung des Lagewinkels des Rotors lässt sich die Lageregelung besonders genau realisieren. Wird der Lagewinkel aus einem Rotorlage-Modell bestimmt, dann kann der Rotor-Lagegeber auch in vorteilhafter Weise eingespart werden.

Der Ansteuerung ist weiterhin vorteilhafter Weise ein Stromrichter-Leistungsteil zugeordnet. Die elektrische Maschine kann z.B. als Asynchronmotor ausgebildet sein oder auch als PM-Synchronmotor mit Permanentmagneten am Läufer. In letzterem Fall kann die Haltebremse auch dadurch besonders robust realisiert werden, dass der Stator des PM-Synchronmotors mit einem Gleichstrom gespeist wird, um eine Bremswirkung zu erzielen. Der Gleichstrom kann durch eine Batterie oder alternativ durch einen Gleichrichter bereitgestellt werden.

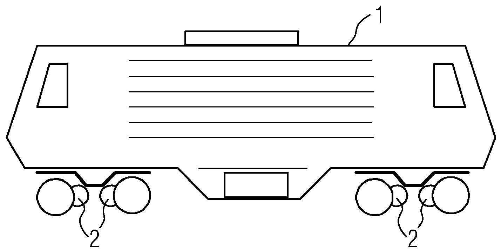

Weitere vorteilhafte Ausgestaltungen der Erfindung gemäß den Merkmalen der Unteransprüche werden im folgenden anhand eines schematisch dargestellten Ausführungsbeispiels in der Zeichnung näher erläutert. Die Zeichnung zeigt: FIG ein gleisgebundes Triebfahrzeug.

Die Betriebsbremse eines gleisgebunden Triebfahrzeugs 1 ist weiterhin komplett generatorisch durch eine elektrische Maschine realisiert. Der Antrieb kann mit der gleichen elektrischen Maschine 2 oder mit einer weiteren elektrischen Maschine erfolgen. Eine Sicherheitsbremse erfolgt bei Ausfall des geregelten Antriebs- und Bremssystems durch generatorische Speisung eines PM-Synchronmotors auf einen Notbremswiderstand. Dieser PM-Synchronmotor kann mit der als Antrieb verwendeten elektrischen Maschine oder auch der als Betriebsbremse benutzten elektrischen Maschine übereinstimmen.

Erfindungsgemäß wird nun eine elektrische Maschine 2 als Haltebremse anstelle einer mechanischen Bremse eingesetzt. Diese elektrische Maschine kann auch als Betriebsbremse, Sicherheitsbremse oder auch als Antrieb eingesetzt werden.

Dabei wird die elektrische Maschine 2 so angesteuert, dass die Lage des Rotors im Stator auch bei einem von außen einwirkenden Drehmoment gleich bleibt. Die elektrische Maschine 2 wird mittels einer Lageregelung so angesteuert, dass der Rotor auf eine Solllage geregelt wird. Zum optimalen Betrieb der Lageregelung ist die Information über die Istlage des Rotors notwendig. Diese kann mittels eines Rotor-Lagegebers oder mittels eines Rotorlage-Modells bestimmt werden. Für das Rotorlage-Modell werden elektrische Messgrößen verwendet. Die Auswertung des Rotorlage-Modells mittels elektrischer Größen kann auf der Auswertung magnetischer Unsymmetrien des Rotors oder der Auswertung lageabhängiger Induktivitätsunterschiede des Rotors beruhen.

Die elektrische Maschine 2 wird im Betrieb als Haltebremse mittels eines Stromricher-Leistungsteils mit Strom gespeist. Die elektrische Maschine 2 kann weiterhin als Asynchronmotor oder auch als PM-Synchronmotor ausgeführt sein.

In letzterem Fall kann eine Haltebremse auch einfach dadurch realisiert werden, dass der PM-Synchronmotor mit einem Gleichstrom gespeist wird, um eine Bremswirkung zu erzielen. Der Gleichstrom kann durch eine Batterie oder alternativ durch einen Gleichrichter bereitgestellt werden.

## Patentansprüche

1. Gleisgebundenes Triebfahrzeug (1) mit einer Haltebremse, wobei die Haltebremse mittels zumindest einer elektrischen Maschine (2) realisiert ist, welche einen Rotor und einen Stator aufweist, wobei eine Ansteuerung der elektrischen Maschine (2) vorgesehen ist, welche die elektrische Maschine (2) so ansteuert, dass die Lage des Rotors im Stator bei einem von außen einwirkenden Drehmoment gleich bleibt, wobei der Ansteuerung eine Lageregelung zugeordnet ist, mittels welcher der Rotor auf eine Solllage geregelt wird,
**dadurch gekennzeichnet, dass** der Ansteuerung ein Rotor-Lagegeber zugeordnet ist, mit dem der Lagewinkel des Rotors bestimmt wird, oder
der Ansteuerung ein Mittel zugeordnet ist, welches den Lagewinkel des Rotors aus elektrischen Größen mit Hilfe eines Rotorlage-Modells bestimmt.

2. Gleisgebundenes Triebfahrzeug (1) nach Anspruch 1, **dadurch gekennzeichnet, dass** die Bestimmung des Lagewinkels des Rotors auf der Auswertung von magnetischen Unsymmetrien des Rotors beruht, indem elektrische Größen ausgewertet werden.

3. Gleisgebundenes Triebfahrzeug (1) nach Anspruch 1, **dadurch gekennzeichnet, dass** die Bestimmung des Lagewinkels des Rotors auf der Auswertung von lageabhängigen Induktivitätsunterschieden des Rotors beruht.

4. Gleisgebundenes Triebfahrzeug (1) nach einem oder mehreren der Ansprüche 1 bis 3, **dadurch gekenn-zeichnet**, dass der Ansteuerung ein Stromrichter-Leistungsteil zugeordnet ist, mit welchem die elektrische Maschine (2) mit Strom speisbar ist.

5. Gleisgebundenes Triebfahrzeug (1) nach einem oder mehreren der Ansprüche 1 bis 4, **dadurch gekenn-zeichnet**, dass die elektrische Maschine (2) ein Asynchronmotor ist.

6. Gleisgebundenes Triebfahrzeug (1) nach einem oder mehreren der Ansprüche 1 bis 5, **dadurch gekennzeichnet, dass** die elektrische Maschine (2) ein PM-Synchronmotor ist.

7. Gleisgebundenes Triebfahrzeug (1) nach Anspruch 6, **dadurch gekennzeichnet, dass** die Ansteuerung der elektrischen Maschine (2) eine Betriebsart aufweist, bei der der Stator des PM-Synchronmotors mit einem Gleichstrom gespeist wird, um eine Bremswirkung zu erzielen.

8. Verfahren zum Betrieb eines gleisgebundenen Triebfahrzeugs (1) mit einer Haltebremse, wobei die Haltebremse mittels zumindest einer elektrischen Maschine (2) realisiert ist, welche einen Rotor und einen Stator aufweist, wobei eine Ansteuerung der elektrischen Maschine (2) vorgesehen ist, welche die elektrische Maschine (2) so ansteuert, dass die Lage des Rotors im Stator bei einem von außen einwirkenden Drehmoment gleich bleibt, wobei der Ansteuerung eine Lageregelung zugeordnet ist, mittels welcher der Rotor auf eine Solllage geregelt wird,
**dadurch gekennzeichnet, dass**
der Ansteuerung ein Rotor-Lagegeber zugeordnet ist, mit dem der Lagewinkel des Rotors bestimmt wird, oder
der Ansteuerung ein Mittel zugeordnet ist, welches den Lagewinkel des Rotors aus elektrischen Größen mit Hilfe eines Rotorlage-Modells bestimmt.

9. Verfahren zum Betrieb eines gleisgebundenen Triebfahrzeugs (1) nach Anspruch 8, **dadurch gekennzeichnet, dass** der Lagewinkel des Rotors mittels einer Auswertung der magnetischen Unsymmetrien des Rotors bestimmt wird.

10. Verfahren zum Betrieb eines gleisgebundenen Triebfahrzeugs (1) nach Anspruch 8, **dadurch gekenn-zeichnet**, dass der Lagewinkel des Rotors mittels einer Auswertung von lageabhängigen Induktivitätsunterschieden des Rotors bestimmt wird.

11. Verfahren zum Betrieb eines gleisgebundenen Triebfahrzeugs (1) nach einem oder mehreren der Ansprüche 8 bis 10,
**dadurch gekennzeichnet, dass** die elektrische Maschine (2) mittels eines Stromrichter-Leistungsteils mit Strom gespeist wird.

12. Verfahren zum Betrieb eines gleisgebundenen Triebfahrzeugs (1) nach einem oder mehreren der Ansprüche 8 bis 11,
**dadurch gekennzeichnet, dass** die elektrische Maschine (2) ein PM-Synchronmotor ist und der Stator des PM-Synchronmotors mit einem Gleichstrom gespeist wird, um eine Bremswirkung zu erzielen.

## Claims

1. Track-bound traction unit (1) having a holding brake, wherein the holding brake is implemented by means of at least one electric machine (2) which has a rotor and a stator, wherein a control device of the electric machine (2) is provided which controls the electric machine (2) in such a way that the position of the rotor in the stator remains the same when a torque acts from the outside, wherein the control device is assigned a position closed-loop control by means of which the rotor is adjusted to a setpoint position,
**characterized in that** the control device is assigned a rotor position encoder with which the position angle of the rotor is determined, or the control device is assigned a means which determines the position angle of the rotor from electrical variables using a rotor position model.

2. Track-bound traction unit (1) according to Claim 1,
**characterized in that** the determination of the position angle of the rotor is based on the evaluation of magnetic asymmetries of the rotor **in that** electrical variables are evaluated.

3. Track-bound traction unit (1) according to Claim 1,
**characterized in that** the determination of the position angle of the rotor is based on the evaluation of position-dependent differences in inductance of the rotor.

4. Track-bound traction unit (1) according to one or more of Claims 1 to 3, **characterized in that** the control device is assigned a power convertor power unit with which the electric machine (2) can be supplied with current.

5. Track-bound traction unit (1) according to one or more of Claims 1 to 4, **characterized in that** the electric machine (2) is an asynchronous motor.

6. Track-bound traction unit (1) according to one or more of Claims 1 to 5, **characterized in that** the electric machine (2) is a PM-synchronous motor.

7. Track-bound traction unit (1) according to Claim 6,
**characterized in that** the control device of the electric machine (2) has an operating mode in which the stator of the PM-synchronous motor is fed with a direct current in order to bring about a braking effect.

8. Method for operating a track-bound traction unit (1) having a holding brake, wherein the holding brake is implemented by means of at least one electric machine (2) which has a rotor and a stator, wherein a control device of the electric machine (2) is provided which controls the electric machine (2) in such a way that the position of the rotor in the stator remains the same when a torque acts from the outside, wherein the control device is assigned a position closed-loop control by means of which the rotor is adjusted to a setpoint position,
**characterized in that** the control device is assigned a rotor position encoder with which the position angle of the rotor is determined, or the control device is assigned a means which determines the position angle of the rotor from electrical variables using a rotor position model.

9. Method for operating a track-bound traction unit (1) according to Claim 8, **characterized in that** the position angle of the rotor is determined by evaluating the magnetic asymmetries of the rotor.

10. Method for operating a track-bound traction unit (1) according to Claim 8, **characterized in that** the position angle of the rotor is determined by means of an evaluation of position-dependent differences in inductance of the rotor.

11. Method for operating a track-bound traction unit (1) according to one or more of Claims 8 to 10, **characterized in that** the electric machine (2) is supplied with current by means of a power convertor power unit.

12. Method for operating a track-bound traction unit (1) according to one or more of Claims 8 to 11, **characterized in that** the electric machine (2) is a PM-synchronous motor, and the stator of the PM-synchronous motor is supplied with a direct current in order to bring about a braking effect.

## Revendications

1. Motrice (1) sur rails, comprenant un frein d'arrêt, le frein d'arrêt étant réalisé au moyen d'au moins une machine (2) électrique, qui a un rotor et un stator, dans laquelle il est prévu une commande de la machine (2) électrique, qui commande la machine (2) électrique de manière à ce que la position du rotor dans le stator reste la même pour un couple de rotation s'appliquant de l'extérieur, dans laquelle, à la commande, est associée une régulation de position, au moyen de laquelle le rotor est réglé à une position de consigne,
**caractérisé en ce qu'**à la commande est associé un indicateur de position du rotor, par lequel l'angle de position du rotor est déterminé ou
à la commande est associé un moyen, qui détermine l'angle de position du rotor à partir de grandeurs électriques à l'aide d'un modèle de position de rotor.

2. Motrice (1) sur rails suivant la revendication 1,
**caractérisée en ce que** la détermination de l'angle de position du rotor repose sur l'exploitation de dissymétries magnétiques du rotor, en exploitant des grandeurs électriques.

3. Motrice (1) sur rails suivant la revendication 1,
**caractérisée en ce que** la détermination de l'angle de position du rotor repose sur l'exploitation de différences d'inductance du rotor en fonction de la position.

4. Motrice (1) sur rails suivant l'une ou plusieurs des revendications 1 à 3, **caractérisée en ce qu'**à la commande est associée une partie de puissance de convertisseur, par laquelle la machine (2) électrique peut être alimentée en courant.

5. Motrice (1) sur rails suivant l'une ou plusieurs des revendications 1 à 4, **caractérisée en ce que** la machine (2) électrique est un moteur asynchrone.

6. Motrice (1) sur rails suivant l'une ou plusieurs des revendications 1 à 5, caractérisée en ce la machine (2) électrique est un moteur synchrone PM.

7. Motrice (1) sur rails suivant la revendication 6, **caractérisée en ce que** la commande de la machine (2) électrique a un type de fonctionnement, dans lequel le stator du moteur synchrone PM est alimenté en un courant continu pour obtenir un effet de freinage.

8. Procédé pour faire fonctionner une motrice (1) sur rails ayant un frein d'arrêt, dans lequel le frein d'arrêt est réalisé au moyen d'au moins une machine (2) électrique, qui a un rotor et un stator, dans lequel il est prévu une commande de la machine (2) électrique, qui commande la machine (2) électrique de manière à ce que la position du rotor dans le stator reste la même lorsqu'un couple s'applique de l'extérieur, dans lequel à la commande est associé un réglage de position, au moyen duquel le rotor est réglé à une position de consigne,
**caractérisé en ce que**
à la commande est associé un indicateur de position de rotor, par lequel l'angle de position du rotor est déterminé ou
à la commande est associé un moyen, qui détermine l'angle de position du rotor à partir de grandeurs électriques à l'aide d'un modèle de position de rotor.

9. Procédé pour faire fonctionner une motrice (1) de rails suivant la revendication 8, **caractérisé en ce que** l'on détermine l'angle de position du rotor, en exploitant des dissymétries magnétiques du rotor.

10. Procédé pour faire fonctionner une motrice (1) de rails suivant la revendication 8, **caractérisé en ce que** l'on détermine l'angle de position du rotor en exploitant des différences d'inductance du rotor en fonction de la position.

11. Procédé pour faire fonctionner une motrice (1) de rails suivant l'une ou plusieurs des revendications 8 à 10, **caractérisé en ce que** l'on alimente la machine (2) électrique en courant au moyen d'une partie de puissance d'un convertisseur.

12. Procédé pour faire fonctionner une motrice (1) de rails suivant l'une ou plusieurs des revendications 8 à 11, **caractérisé en ce que** la machine (2) électrique est un moteur synchrone PM et le stator du moteur synchrone PM est alimenté en un courant continu pour obtenir un effet de freinage.
